# EUROPEAN PATENT SPECIFICATION

(11) **EP 3 617 615 B1**
(45) Date of publication and mention of the grant of the patent: **04.06.2025**
(21) Application number: 18791098.9
(22) Date of filing: 24.04.2018
(51) Int. Cl.: F16K 31/06, F25B 41/35

(54) **VALVE DEVICE AND REFRIGERATOR REFRIGERATING SYSTEM HAVING THE VALVE DEVICE**
VENTILVORRICHTUNG UND KÜHLSYSTEM EINES KÜHLSCHRANKS MIT DER VENTILVORRICHTUNG
DISPOSITIF DE SOUPAPE ET SYSTÈME DE RÉFRIGÉRATION DE RÉFRIGÉRATEUR COMPRENANT CE DISPOSITIF DE SOUPAPE

(30) Priority: 28.04.2017 CN 201710292756; 28.04.2017 CN 201710292766; 28.04.2017 CN 201710292757; 28.04.2017 CN 201710292499
(43) Date of publication of application: 04.03.2020
(73) Proprietor: Zhejiang Sanhua Intelligent Controls Co., Ltd., Shaoxing, Zhejiang 312500 (CN)
(72) Inventor: CHEN, Bin, Zhenjiang 312500 (CN)
(74) Representative: Maikowski & Ninnemann Patentanwälte Partnerschaft mbB
(86) International application number: PCT/CN2018/084175
(87) International publication number: WO 2018/196728

(56) References cited:
- EP-A1- 1 593 891
- CN-A- 101 275 678
- CN-A- 101 956 830
- CN-A- 102 644 785
- CN-A- 102 927 342
- CN-A- 103 453 699
- CN-A- 105 485 400
- CN-A- 105 715 823
- JP-A- 2006 097 947
- US-A1- 2016 341 336

## Description

### FIELD

The present disclosure relates to the technical field of refrigeration, and in particular to a valve device for flow regulation and a refrigerator refrigerating system having the valve device.

### BACKGROUND

With the adjustment of test requirements of the refrigerator energy efficiency standard and the improvement of the energy efficiency requirements of the refrigerators, capillary throttling is used in the throttling parts of most existing refrigerators. Since the capillary does not have the function of flow regulation, a refrigeration system of the refrigerator cannot operate at the best operating conditions under different environmental conditions, which has a great influence on the energy efficiency.

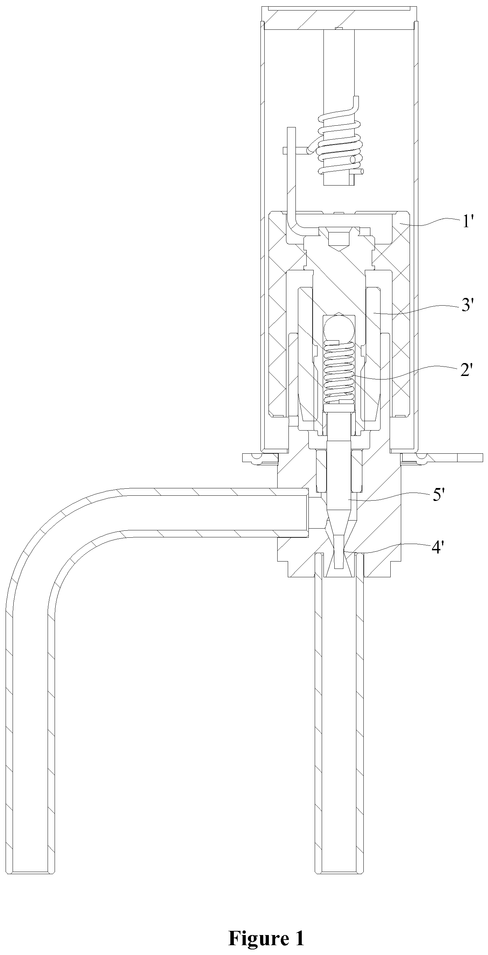

In the conventional technology, an electronic expansion valve for air conditioning can be applied to the refrigerator to achieve the function of flow regulation. Referring to Figure 1, Figure 1 is a schematic sectional view of a conventional electronic expansion valve for air conditioning.

During operation, through an external excitation coil, a motor magnetic rotor 1' is driven to rotate, which drives a valve needle screw 2' to rotate relative to a fixing nut 3', thereby realizing the up and down movement of a valve needle 5' at a valve port 4'. Relative position changes between a tapered end portion of the valve needle 5' and the valve port 4' cause a flow section of this position to change, thereby regulating the flow rate.

In an air conditioning system, the electronic expansion valve adopts closed-loop control, which has a linear flow characteristic. Flow deviation at a certain pulse operating point has a relatively small influence in the system, and is allowed to reach 20%. In addition, a compressor in the air conditioning system does not stop, and when the control temperature balance is reached, the compressor is operated at a very low frequency such as a frequency of 10Hz. Therefore, it is not necessary for the electronic expansion valve used in air conditioning to have a function of full closing.

However, the refrigerating capacity of the refrigerator is small, and accordingly, a flow regulation range is also small. As shown in Figure 1, in a case that the valve port 4' and the tapered valve needle 5' are adopted in the electronic expansion valve to regulate the flow, the flow control precision deviation can reach 20%, far exceeding the flow control precision required by the refrigerator.

In addition, the refrigerator is an intermittent refrigeration device, the compressor is stopped after the temperature balance is reached, and after the compressor is stopped, the refrigeration is stopped, and a refrigerant in a condenser flows into an evaporator, which is not only beneficial for energy saving, but also ensures more accurate temperature control. Therefore, the conventional electronic expansion valve cannot meet requirements on internal leakage of the refrigerator system. Moreover, even if the valve needle 5' can completely close the valve port 4', the valve port 4' and the valve needle 5' are prone to wear, which affects the flow control precision and causes the valve to be easily stuck.

It can be understood that, in addition to the refrigerator, similar problems also exist in other small refrigeration systems. Documents CN-A-105485400, CN-A-105715823 and EP-A1-1593891 disclose a valve device according to the preamble of claim 1.

### SUMMARY

An object of the present invention is to provide a valve device. The flow deviation of the valve device can be controlled within a small range, thereby meeting the requirements for accurate flow control of refrigerators and similar small refrigerant systems.

Another object of the present invention is to provide a refrigerator refrigerating system having the valve device. The refrigerator refrigerating system which is capable of regulating refrigerant flow according to working conditions, and has small flow deviation, thereby improving the energy efficiency of the system.

In order to solve the above technical problems, a valve device according to the present invention, is provided having the features of claim 1.

According to the valve device provided by the present invention the valve needle structure of the electronic expansion valve for air conditioning in the conventional technology is discarded, and a component for regulating the flow rate is realized by a sliding block structure. The flow channel portion and the blocking portion are arranged in the sliding block along the circumferential direction, wherein the flow channel portion is in communication with the valve chamber, and the inlet of the valve seat component is also in communication with the valve chamber. The sliding block is driven to rotate by the drive component to cause the flow channel portion to communicate with the outlet of the valve seat component, thereby causing the inlet to communicate with the outlet; or the sliding block is driven to rotate by the drive component to cause the blocking portion to close the outlet, thereby cutting off the communication between the inlet and the outlet. Thus, the communication or noncommunication between the inlet and the outlet is realized through the rotation of the sliding block relative to the valve seat component, and the valve device has the function of complete closing, and no stuck failure will occur when the valve device is completely closed. In addition, the flow area of the flow channel portion varies along the circumferential direction. Thus, through the rotation of the sliding block, different portions of the flow channel portion in the sliding block communicate with the outlet of the valve seat, so as to realize the regulation of the flow rate. Since the flow area of the flow channel portion along the circumferential direction is easy to set and regulate, and can be set to a small value according to the system requirements, the flow deviation can be easily controlled to be within a small range such as less than 5% by setting the flow area of the flow channel portion of the sliding block, which can satisfy the flow control accuracy requirements of the refrigerator and similar small refrigeration systems. The valve device according to the present invention, i.e. the subject-matter of claim 1, also includes a filter component, which is configured to filter the refrigerant flowing into the flow channel portion, and includes a sliding block provided with a chamber at a top portion of the sliding block, wherein the filter component is embedded in the chamber and has a predetermined distance from a bottom wall of the chamber, and the flow channel portion is in communication with a receiving chamber formed between the filter component and the chamber.

Based on the valve device described above, some of the technical features can be further defined to form the following new technical solutions:

In the valve device as described above, the drive component includes a rotor component, wherein the rotor component includes a magnet and a rotating shaft inserted in the magnet, the sliding block is sleeved on the rotating shaft, and the rotor component can drive the sliding block to rotate when the rotor component rotates.

In the valve device as described above, a latching structure is further provided between the magnet and the sliding block.

In the valve device as described above, a protruding key portion is provided at a lower end of the magnet, the sliding block has a key groove engaged with the key portion, and the key portion and the key groove together form the latching structure.

The valve device as described above further includes a casing enclosing the magnet, wherein a bottom of the casing is fixed to the valve seat component, the magnet includes a cylindrical portion and a partition portion, the partition portion separates an inner chamber of the cylindrical portion into an upper chamber and a lower chamber, and the valve chamber is defined by a peripheral wall of the lower chamber, the casing and the valve seat component.

In the valve device as described above, a preloading spring is further provided between the sliding block and the partition portion to bring the sliding block into close contact with a top surface of the valve seat component.

In the valve device as described above, the partition portion has more than one balance hole, and the balance holes communicate the upper chamber with the lower chamber.

In the valve device as described above, the rotating shaft is also inserted in the valve seat component, and the rotating shaft is in a clearance fit with the valve seat component, so that the rotating shaft can rotate relative to the valve seat component.

The valve device as described above further includes a stop component, which is configured to define an initial position of the sliding block relative to the valve seat component.

In the valve device as described above, the stop component includes a first stop portion fixed to the valve seat component and a second stop portion arranged on the drive component, wherein the drive component can drive the second stop portion to rotate synchronously with the sliding block, and the first stop portion and the second stop portion are configured in the following manner:

the second stop portion is in a state abutting against one side of the first stop portion, and the blocking portion closes the outlet; during the rotation of the second stop portion with the sliding block, one end and another end of the flow channel portion are sequentially in communication with the outlet, and in a rotating direction, in a state where another end of the flow channel portion is in communication with the outlet, the second stop portion abuts against another side of the first stop portion.

In the valve device as described above, the first stop portion is an elastic member.

In the valve device as described above, the flow channel portion includes multiple flow channel orifices with different diameters, and the multiple flow channel orifices are arranged in an arc.

In the valve device as described above, the diameters of the multiple flow channel orifices are sequentially increased in the circumferential direction.

In the valve device as described above, the bottom surface of the sliding block is provided with multiple inner grooves respectively corresponding to positions of the multiple flow channel orifices, and each of the inner grooves is larger than the corresponding flow channel orifice.

In the valve device as described above, the flow channel portion is a continuous section-variable channel having an arc shape.

In the valve device as described above, a support boss for supporting the filter component is provided at a middle position of the bottom of the chamber, wherein the receiving chamber is defined by a bottom wall of the filter component, a side wall and the bottom wall of the chamber and an outer peripheral wall of the support boss.

In the valve device as described above, the filter component is formed by sintering tin-bronze powder or stainless steel powder, or the filter component is made of multi layers of stainless steel mesh.

In the valve device as described above, the number of meshes of the filter component is greater than 100 mesh.

In the valve device as described above, the inlet and the outlet are arranged at the bottom of the valve seat component, a valve port communicating with the outlet is provided at a top portion of the valve seat component, and the inlet is in communication with the valve chamber through a flow port arranged in a side portion of the valve seat component.

In the valve device as described above, the valve seat component includes a support seat and a valve seat body fixed on the support seat, wherein the valve port and the flow port are both arranged in the valve seat body.

In the valve device as described above, the support seat has a through hole adapted to the valve seat body, the valve seat body is firmly fit into the through hole, and the inlet and the outlet are both arranged in the valve seat body.

A refrigerator refrigerating system is further provided according to the present invention. The refrigerator refrigerating system includes a compressor, a condenser and an evaporator, wherein an inlet of the condenser is connected to an outlet of the compressor, and an outlet of the evaporator is connected to an inlet of the compressor. The refrigerator refrigerating system further includes a valve device arranged between the condenser and the evaporator, wherein the valve device is the valve device according to claim 1.

In the refrigerator refrigerating system provided by the present invention the valve device is provided between the condenser and the evaporator, and the flow rate of the refrigerant flowing into the evaporator is regulated by the valve device, wherein the valve device is the valve device according to any one of the above. Since the valve device can control the flow deviation to be within a small range and the flow control accuracy is high, the refrigerator refrigerating system provided with the valve device can not only regulate the flow rate of the refrigerant according to the working condition, but also has high regulation accuracy, which can enable the refrigerator to achieve better operating conditions under different environmental conditions and thereby improve the energy efficiency of the system.

The refrigerator refrigerating system as described above further includes a heat exchanger for heating the refrigerant flowing from the evaporator to the compressor.

In the refrigerator refrigerating system as described above, the heat exchanger includes a capillary tube and a gas return tube, wherein the capillary tube is arranged between the valve device and the condenser, one end of the gas return tube is connected to the outlet of the evaporator, another end of the gas return tube is connected to the inlet of the compressor, and the capillary tube is wound around the gas return tube.

The refrigerator refrigerating system as described above further includes a drying filter arranged between the capillary tube and the condenser.

In the refrigerator refrigerating system as described above, a flow area of the capillary tube is not smaller than a maximum flow area of the flow channel portion.

### BRIEF DESCRIPTION OF THE DRAWINGS

Figure 1 is a schematic sectional view of a conventional electronic expansion valve for air conditioning;
Figure 2 is a schematic sectional view of an embodiment of a valve device according to the present invention;
Figure 3 is a schematic structural view of a sliding block shown in Figure 2 as viewed from a certain perspective;
Figure 4 is a schematic structural view of the sliding block shown in Figure 2 as viewed from another perspective;
Figure 5 is a top view of the sliding block shown in Figure 2;
Figure 6 is a sectional view taken along a direction A-A in Figure 5;
Figure 7 is a top view of the sliding block fitted with a filter component according to the invention;
Figure 8 is a schematic sectional view taken along a direction B-B in Figure 7;
Figure 9 is a schematic structural view of a valve seat component shown in Figure 2;
Figure 10 is a top view of the valve seat component shown in Figure 9;
Figure 11 is a schematic sectional view taken along a direction C-C in Figure 10;
Figure 12 is a schematic structural view of a rotor component shown in Figure 2;
Figure 13 is a schematic sectional view of the rotor component shown in Figure 2; and
Figure 14 is a schematic structural view of an embodiment of a refrigerator refrigerating system according to the present invention.

Reference numerals in Figure 1:

| | |
|---|---|
| magnetic rotor 1', | valve needle screw 2', |
| fixing nut 3', valve port 4', | valve needle 5'; |

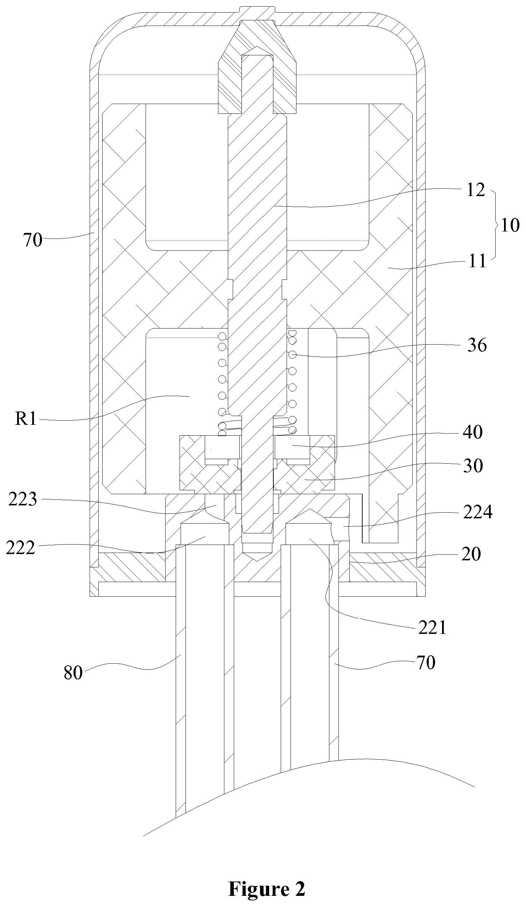

Reference numerals in Figures 2 to 14:

| | |
|---|---|
| compressor 101, | condenser 102, |
| evaporator 103, | drying filter 104, |
| heat exchanger 105, | capillary tube 151, |
| gas return tube 152, | valve device 100; |
| rotor component 10, | magnet 11, |
| cylindrical portion 111, | partition portion 112, |
| balance hole 1121, | key portion 113, |
| second stop portion 114, | rotating shaft 12, |
| bushing 121, | valve seat component 20, |
| support seat 21, | valve seat body 22, |
| inlet 221, | outlet 222, |
| valve port 223, | flow port 224, |
| shaft hole 225, | sliding block 30, |
| flow channel orifice 31 (31a, 31b, 31c, 31d, 31e), | chamber 32, |
| support boss 33, | key groove 34, |
| inner groove 35, | preloading spring 36, |
| filter component 40, | first stop portion 50, |
| stop pin 51, | casing 60, |
| inlet pipe 70, | outlet pipe 80, |
| valve chamber R1, | receiving chamber R2 |

### DETAILED DESCRIPTION OF THE EMBODIMENTS

In order to provide those skilled in the art with a better understanding of the solutions of the present invention, the present invention is described hereinafter in further detail in conjunction with the drawings and specific embodiments.

Referring to Figure 2, Figure 2 is a schematic sectional view of a specific embodiment of a valve device according to the present invention.

In the present embodiment, the valve device includes a drive component and a valve seat component 20, wherein the valve seat component 20 has an inlet 221 and an outlet 222, and the inlet 221 is in communication with a valve chamber R1 of the valve device.

The valve device further includes a sliding block 30 supported by the valve seat component 20, and a bottom surface of the sliding block 30 is in contact with a top surface of the valve seat component 20.

The sliding block 30 has a flow channel portion and a blocking portion, which are circumferentially sleeved on a rotation center of the sliding block, wherein a flow area of the flow channel portion varies along a circumferential direction, and the flow channel portion is in communication with the valve chamber R1.

The drive component is configured to drive the sliding block 30 to rotate relative to the valve seat component 20, so as to cause the flow channel portion to communicate with the outlet 222 and thereby communicate the inlet 221 with the outlet 222, or to cause the blocking portion to close the outlet 222 and thereby cutting off the communication between the inlet 221 and the outlet 222.

It can be understood that a distance between the flow channel portion and the rotation center of the sliding block 30 should enable the flow channel portion to communicate with the outlet 222 when the sliding block 30 rotates.

As described above, the valve device discards the valve needle structure of the electronic expansion valve for air conditioning in the conventional technology, and a component for regulating the flow rate is realized by a sliding block structure. The flow channel portion and the blocking portion are arranged in the sliding block 30 along the circumferential direction, wherein the flow channel portion is in communication with the valve chamber R1, and the inlet 221 of the valve seat component 20 is also in communication with the valve chamber R1. The sliding block 30 is driven to rotate by the drive component to cause the flow channel portion to communicate with the outlet 222 of the valve seat component 20, thereby causing the inlet 221 to communicate with the outlet 222; or the sliding block 30 is driven to rotate by the drive component to cause the blocking portion to close the outlet 222, thereby cutting off the communication between the inlet 221 and the outlet 222. Thus, the communication or noncommunication between the inlet 221 and the outlet 222 is realized through the rotation of the sliding block 30 relative to the valve seat component 20, and the valve device has the function of complete closing, and no stuck failure will occur when the valve device is completely closed.

In addition, the flow area of the flow channel portion varies along the circumferential direction. Thus, through the rotation of the sliding block 30, different portions of the flow channel portion in the sliding block 30 communicate with the outlet 222, so as to realize the regulation of the flow rate. Since the flow area of the flow channel portion along the circumferential direction is easy to set and regulate, and can be set to a small value according to the system requirements, the flow deviation can be easily controlled to be within a small range such as less than 5% by setting the flow area of the flow channel portion of the sliding block 30, which can satisfy the flow control accuracy requirements of the refrigerator and similar small refrigeration systems.

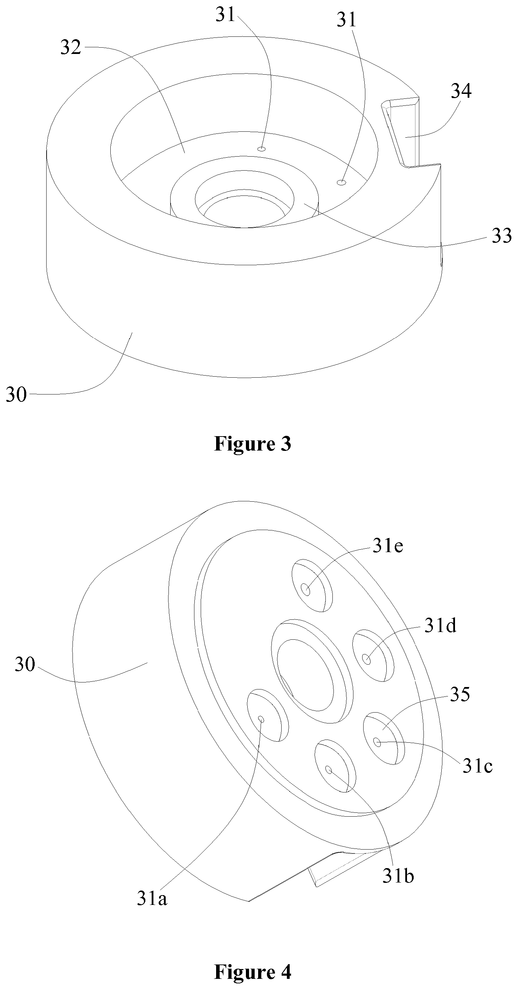

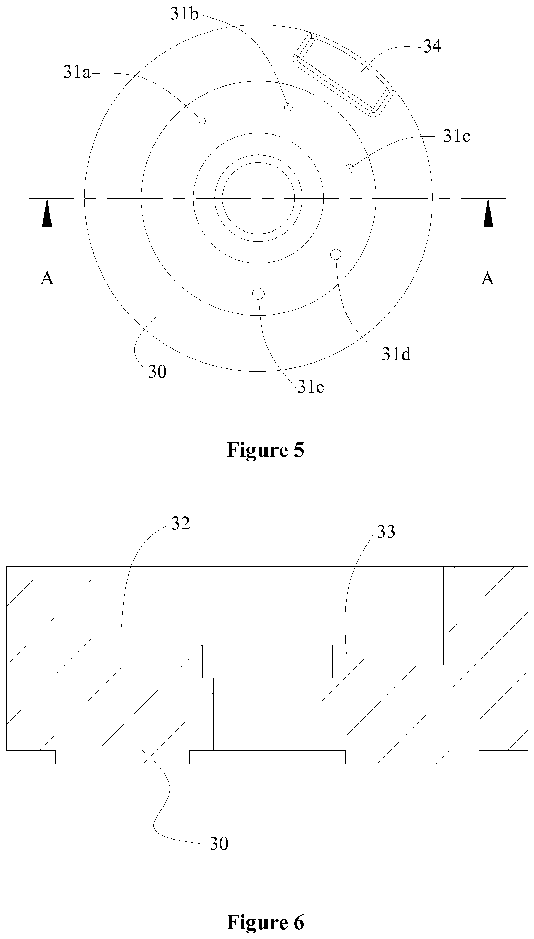

Referring to Figures 3 to 6 together, Figure 3 is a schematic structural view of the sliding block shown in Figure 2 as viewed from a certain perspective; Figure 4 is a schematic structural view of the sliding block shown in Figure 2 as viewed from another perspective; Figure 5 is a top view of the sliding block shown in Figure 2; and Figure 6 is a sectional view taken along the direction A-A in Figure 5.

In the specific embodiment, the flow channel portion of the sliding block 30 has multiple flow channel orifices 31 with different diameters. Specifically, the multiple flow channel orifices 31 are arranged in an arc around the rotation center of the sliding block 30. Thus, a portion at an outer end, between two flow channel orifices 31, forms the blocking portion of the sliding block 30.

In the embodiment shown in Figures 4 and 5, the flow channel portion of the sliding block 30 is provided with five flow channel orifices 31, and the five flow channel orifices 31 sequentially are 31a, 31b, 31c, 31d and 31e in a clockwise direction shown in Figure 5, as viewed from a perspective shown in Figure 5.

In the illustrated embodiment, the diameters of the five flow channel orifices 31a, 31b, 31c, 31d and 31e sequentially increase, and angles between two adjacent flow channel orifices 31 are constant, that is, the multiple flow channel orifices 31 are uniformly distributed on a circular arc segment. With this design, each time the sliding block 30 is rotated by a same angle, the flow rate is regulated once, which facilitates the operation of the valve device.

As described above, the flow channel portion is designed as a structure with multiple flow channel orifices 31, and the number of the flow channel orifices 31 and the diameter of each flow channel orifice 31 are easy to control, which facilitates the regulation of the flow rate and satisfies the control requirements of the refrigerator and similar small refrigeration systems. In an embodiment, the diameters of the flow channel orifices 31a, 31b, 31c, 31d and 31e are sequentially set to 0.15mm, 0.18mm, 0.21mm, 0.24mm, 0.27mm.

It can be understood that, in practice, the diameters of the flow channel orifices 31 may be irregular when arranged, and in addition, the multiple flow channel orifices 31 may be nonuniformly arranged on the circular arc segment. However, the regular and uniform arrangement of the flow channel orifices as shown in the figures makes it easier to control the product.

Further, referring to Figure 4, multiple inner grooves 35 are provided on the bottom surface of the sliding block 30, which correspond to positions of the multiple flow channel orifices 31, respectively. Moreover, each of the inner grooves 35 is larger than the corresponding flow channel orifice 31.

With the above design, when the sliding block 30 rotates relative to the valve seat component 20, end portions of the flow channel orifices 31 are prevented from directly rubbing against the valve seat component 20, which prevents the blocking of the flow channel orifices 31 caused by rotation wear between the bottom surface of the sliding block 30 and the top surface of the valve seat component 20 and ensures the reliability of the flow control of the product.

Specifically, for ease of machining, dimensions of the inner grooves 35 may be unified. In the embodiment shown in Figure 4, each inner groove 35 has a counterbore structure with a uniform diameter. It should be understood that the shape of the inner groove 35 is unrestricted, as long as the end portions of the flow channel orifices 31 can be prevented from directly rubbing against the valve seat component 20.

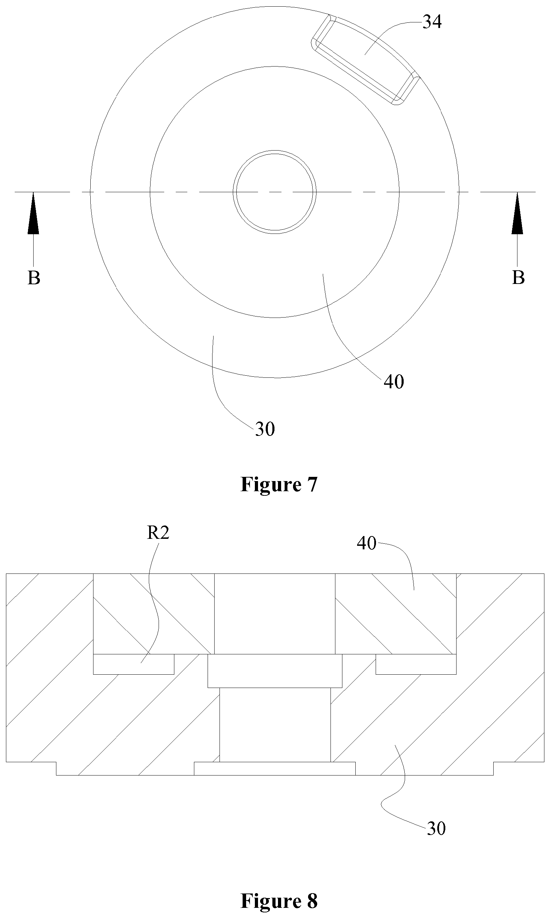

Referring to Figures 7 to 8 together, Figure 7 is a top view of the sliding block fitted with a filter component according to the present invention; and Figure 8 is a schematic sectional view taken along the direction B-B in Figure 7.

The valve device is also provided with a filter component 40. The filter component 40 is configured to filter the refrigerant flowing through the flow channel orifices 31 of the sliding block 30 to prevent the flow channel orifices 31 from being blocked by foreign matter and prevent the performance of the product from being affected.

The filtering ability of the filter component 40 can be determined according to the diameters of the flow channel orifices 31 and other use requirements. Taking the specific diameters of the flow channel orifices 31 as an example, it can be known that the diameter of each flow channel orifice 31 is between 0.1mm to 0.3mm, so in practice, the filter component 40 can at least filter out impurities and foreign matter larger than 0.1mm. In practice, the number of meshes of the filter component 40 may be greater than 100 mesh to meet the basic use requirements.

Specifically, the filter component 40 may be formed by sintering tin-bronze powder or stainless steel powder, or may be made of multi layers of stainless steel mesh.

It is apparent that, with a flow direction of the refrigerant as a reference, the filter component 40 should be arranged at an upstream position of the flow channel orifices 31 of the sliding block 30.

According to the present invention, the top portion of the sliding block 30 is provided with a chamber 32, wherein the filter component 40 is embedded in the chamber 32 and has a predetermined distance from a bottom wall of the chamber 32, such that a receiving chamber R2 is formed between the filter component 40 and the chamber 32, the filtered refrigerant flows into the flow channel orifices 31 through the receiving chamber R2, apparently, and each flow channel orifice 31 is in communication with the receiving chamber R2.

The predetermined distance between the filter component 40 and the bottom wall of the chamber 32 can be set as needed.

More specifically, a support boss 33 supporting the filter component 40 is provided at a middle position of a bottom of the chamber 32. With reference to Figures 3 and 6, such arrangement facilitates the positioning of the filter component 40 within the chamber 32.

As shown in Figure 8, with such arrangement, the receiving chamber R2 is an annular chamber enclosed by a bottom wall of the filter component 40, a side wall and the bottom wall of the chamber 32, and an outer peripheral wall of the support boss 33.

It should be noted that in the present embodiment, although the filter component 40 is embedded in the sliding block 30, the filter component 40 may or may not rotate together with the sliding block 30, when the sliding block 30 rotates relative to the valve seat component 20, which does not affect the filtering effect of the filter component 40.

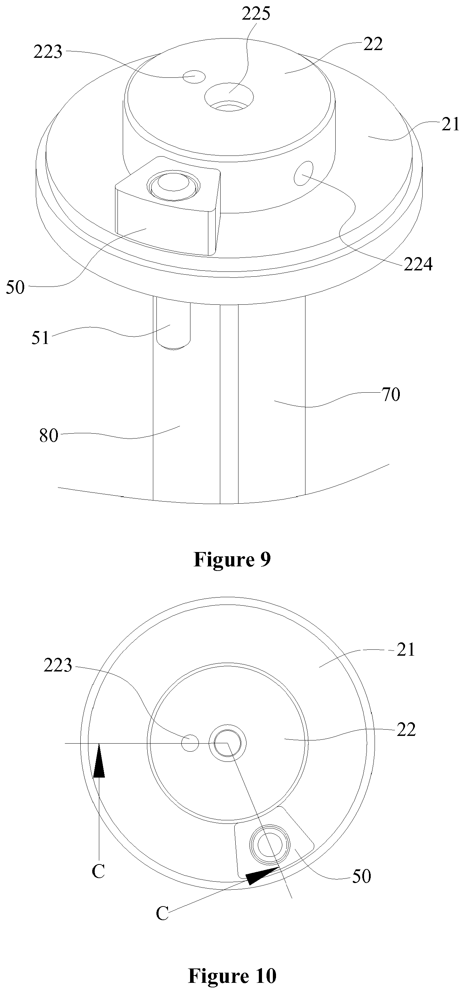

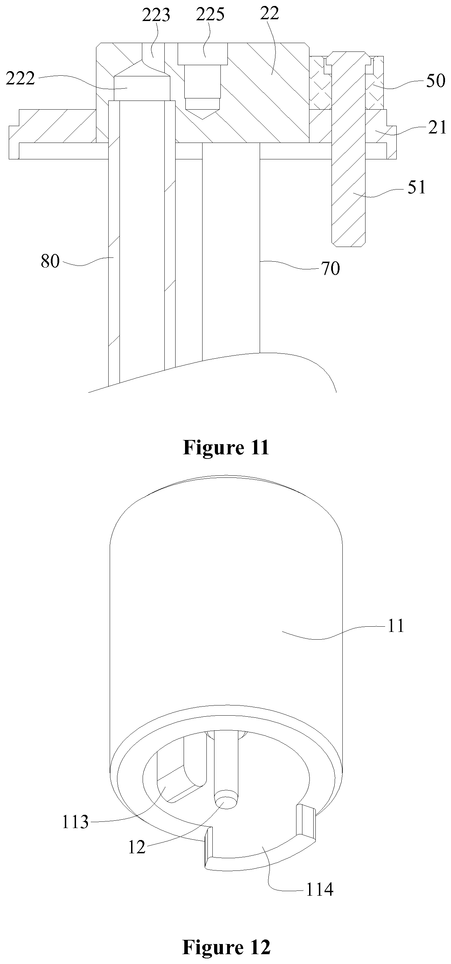

The valve seat component provided herein and cooperating with the sliding block is illustrated in Figures 9 to 11. Figure 9 is a schematic structural view of the valve seat component shown in Figure 2; Figure 10 is a top view of the valve seat component shown in Figure 9; and Figure 11 is a schematic sectional view taken along the direction C-C in Figure 10.

In the present embodiment, an inlet 221 and an outlet 222 are provided at a bottom of the valve seat component 20, and are connected with an inlet pipe 70 and an outlet pipe 80, respectively.

A valve port 223 communicating with the outlet 222 is provided at a top portion of the valve seat component 20, a flow port 224 communicating with the inlet 221 is provided in a side portion of the valve seat component 20, and the flow port 224 is in communication with the valve chamber R1.

It can be understood that the inlet 221 is not in direct communication with the flow channel orifices 31 of the sliding block 30.

It should be understood that when the valve seat component 20 is arranged as above, the position of the flow channel orifice 31 of the sliding block 30 corresponds to the position of the valve port 223, such that during the rotation of the sliding block 30, the flow channel orifice 31 can communicate with the valve port 223 and then communicate with the outlet 222.

Thus, the refrigerant flows in from the inlet pipe 70, then flows into the valve chamber R1 through the inlet 221 and the flow port 224 of the valve seat component 20, then flows into the flow channel orifice 31 through the filter component 40, and flows out of the outlet pipe 80 through the valve port 223 and the outlet 222.

In an embodiment, the valve seat component 20 includes a support seat 21 and a valve seat body 22 fixed thereto. The two are separately arranged and can be fixed by welding, which is simple and reliable.

Both the valve port 223 and the flow port 224 are provided on the valve seat body 22, that is, the sliding block 30 directly abuts against the valve seat body 22 and rotates relative to the valve seat body 22.

Specifically, both the inlet 221 and the outlet 222 may be arranged on the valve seat body 22, a through hole adapted to the valve seat body 22 is arranged on the support seat 21, and the valve seat body 22 is firmly fit into the through hole of the support seat 21.

Both the inlet 221 and the outlet 222 may be arranged on the support seat 21, the valve seat body 22 is fixed to a top surface of the support seat 21, and the valve port 223 and the flow port 224 correspond to positions of the outlet 222 and the inlet 221, respectively.

One portion of the inlet 221 and the outlet 222 may be partially arranged on the valve seat body 22, and another portion may be arranged on the support seat 21.

In addition, the valve seat component 20 may have an integrated structure. However, a split structure is relatively easy to process and reduces the cost.

Referring to Figures 12 to 13 together, Figure 12 is a schematic structural view of a rotor component shown in Figure 2; and

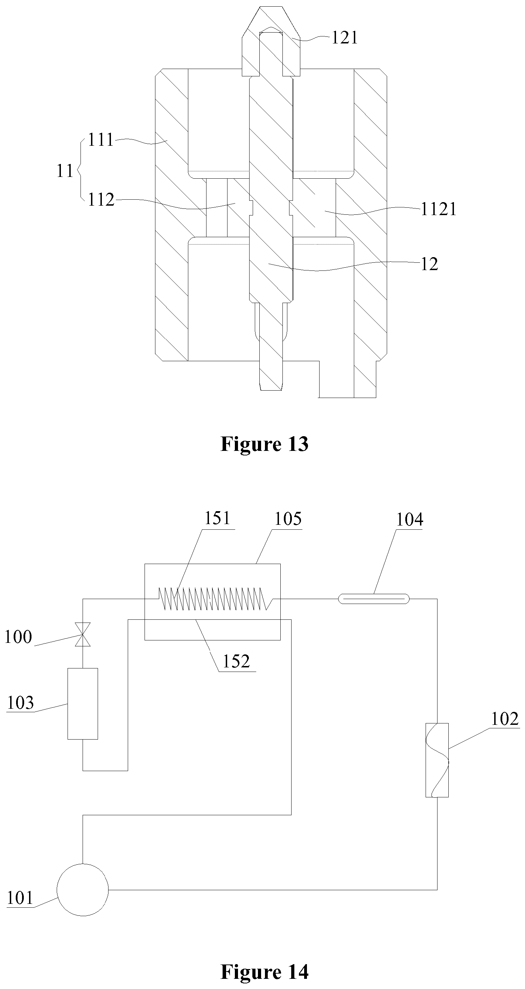

Figure 13 is a schematic sectional view of the rotor component shown in Figure 2.

In the present embodiment, the drive component that drives the sliding block 30 to rotate is a motor, and the motor specifically includes a rotor component 10 and a coil component.

The rotor component 10 includes a magnet 11 and a rotating shaft 12 inserted in the magnet 11, and a lower end of the rotating shaft 12 is sequentially inserted into the filter component 40 and the sliding block 30. During operation, the rotor component 10 is driven to rotate by the external coil component, thereby driving the sliding block 30 to rotate relative to the valve seat body 22.

In order to enable the rotor component 10 to drive the sliding block 30 to rotate together when the rotor component 10 rotates, the sliding block 30 may be fixed relative to the rotating shaft 12, for example, the sliding block 30 is in an interference fit with the rotating shaft 12.

The sliding block 30 may be fixed relative to the magnet 11. In the present embodiment, a latching structure is provided between the magnet 11 and the sliding block 30, such that the sliding block 30 can rotate together with the magnet 11.

Specifically, a protruding key portion 113 is provided at a lower end of the magnet 11, and the sliding block 30 is provided with a key groove 34 engaged with the key portion 113. The key portion 113 is engaged with the key groove 34, such that the sliding block 30 is fixed relative to the magnet 11. In addition, the key portion 113 of the magnet 11 is fitted into the key groove 34, which presses the sliding block 30 against the valve seat body 22 to a certain extent, and thereby ensures that the sliding block 30 abuts against the valve seat body 22 and prevents the refrigerant from flowing in from a clearance between the two.

The valve device further includes a casing 60 enclosing the magnet 11, and a bottom of the casing 60 is fixed to the valve seat component 20. In the present embodiment, the bottom of the casing 60 is fixed to the support seat 21 of the valve seat component 20.

Specifically, an upward facing stepped surface is provided at a top portion of the support seat 21, so as to facilitate positioning with the casing 60.

In an embodiment, the magnet 11 includes a cylindrical portion 111 and a partition portion 112, wherein the partition portion 112 separates an inner chamber of the cylindrical portion 111 into an upper chamber and a lower chamber, such that the rotating shaft 12 is inserted in and fixed to the partition portion 112, a top portion of the rotating shaft 12 is connected with a bushing 121, and the bushing 121 fits with an inner top wall of the casing 60.

The valve chamber R1 is defined by a peripheral wall of the lower chamber of the magnet 11, the casing 60 and the valve seat 21, that is to say, in the present embodiment, the lower chamber of the magnet 11 is a part of the valve chamber R1, which can shorten an axial dimension of the valve device and facilitate its miniaturization.

In an embodiment, a preloading spring 36 is provided between the partition portion 112 and the sliding block 30 to bring the sliding block 30 into close contact with to a top surface of the valve seat body 22.

In the embodiment shown in Figure 1, in a case that the sliding block 30 is embedded with the filter component 40, the preloading spring 36 actually abuts against the filter component 40.

In an embodiment, more than one balance hole 1121 is provided on the partition portion 112 of the magnet 11. The balance holes 1121 communicate the upper chamber with the lower chamber to maintain a pressure balance between the upper chamber and the lower chamber of the magnet 11 and prevent the magnet 11 from playing up and down.

In an embodiment, in order to ensure that the rotation center of the sliding block 30 with respect to the valve seat component 20 does not change, and to ensure that each flow channel orifice 31 can communicate with the outlet 222 during the rotation of the sliding block 30, the lower end of the rotating shaft 12 is further inserted in the valve seat component 20 to ensure the coaxiality of the rotor component 10, the sliding block 30 and the valve seat component 20.

Specifically, the valve seat body 22 is provided with a shaft hole 225 that fits with the rotating shaft 12. The rotating shaft 12 is in a clearance fit with the shaft hole 225, so that the rotating shaft 12 can rotate relative to the valve seat component 20.

The valve device further includes a stop component. The stop component is configured to define an initial position of the sliding block 30 relative to the valve seat component 20, which facilitates the determination of the reference when debugging and exploiting the product.

In an embodiment, the stop component includes a first stop portion 50 fixed to the valve seat component 20 and a second stop portion 14 arranged on the drive component, wherein the drive component can drive the second stop portion 14 to rotate synchronously with the sliding block 30, and the first stop portion and the second stop portion are configured in the following manner:

the second stop portion 114 is in a state abutting against one side of the first stop portion 50, and the blocking portion closes the outlet 222; during the rotation of the second stop portion 114 with the sliding block 30, the flow channel orifices 31 sequentially communicate with the outlet 222, and in a rotating direction, in a state where a last flow channel orifice 31 is in communication with the outlet 222, the second stop portion 114 abuts against another side of the first stop portion 50.

In an embodiment, the first stop portion 50 is an elastic member, such that the second stop portion 114 has an elastic cushion when abutting against the first stop portion 50, thereby avoiding inaccurate position configuration caused by wear and tear after long-term operation.

Specifically, the first stop portion 50 may be made of rubber and fixed on the support seat 21 by a stop pin 51, wherein the top portion of the stop pin 51 is provided with a coming-off prevention boss to prevent the first stop portion 50 from coming off.

In each of the above embodiments, the structure of the flow channel portion is the multiple flow channel orifices 31 distributed in an arc shape. In actual arrangement, the flow channel portion may have other structures such as a continuous section-variable channel in an arc shape, such that a portion where no channel is provided forms the blocking portion for closing the outlet 222 in the circumferential direction.

Specifically, one side wall of the section-variable channel may have a circular arc shape, and another side wall may have an Archimedean spiral shape. Apparently, the two side walls of the section-variable channel may both have the Archimedean spiral shape or other forms, as long as the flow area of the channel varies along the circumferential direction.

Referring to Figure 14, Figure 14 is a schematic structural view of an embodiment of a refrigerator refrigerating system including a valve device according to the present invention.

In the present embodiment, the refrigerator refrigerating system includes a compressor 101, a condenser 102 and an evaporator 103, wherein an inlet of the condenser 102 is connected to an outlet of the compressor 101, and an outlet of the evaporator 103 is connected to an inlet of the compressor 101.

The refrigerator refrigerating system further includes a valve device 100 arranged between the condenser 102 and the evaporator 103, wherein the valve device 100 is the valve device as described above.

The refrigerator refrigerating system is provided with the valve device 100 between the condenser 102 and the evaporator 103, and the flow rate of the refrigerant flowing into the evaporator 103 is regulated by the valve device 100. The valve device 100 is provided with a sliding block structure for regulating the flow rate, and a flow channel portion and a blocking portion are arranged in the sliding block 30 in the circumferential direction, wherein the flow channel portion is in communication with the valve chamber R1, and the inlet 221 of the valve seat component 20 is also in communication with the valve chamber R1. The sliding block 30 is driven to rotate by the drive component to cause the flow channel portion to communicate with the outlet 222 of the valve seat component 20, thereby causing the inlet 221 to communicate with the outlet 222; or the sliding block 30 is driven to rotate by the drive component to cause the blocking portion to close the outlet 222, thereby cutting off the communication between the inlet 221 and the outlet 222. Thus, the communication or noncommunication between the inlet 221 and the outlet 222 is realized through the rotation of the sliding block 30 relative to the valve seat component 20, and the valve device has the function of complete closing, and no stuck failure will occur when the valve device is completely closed. Thus, when the compressor 101 of the refrigerator refrigerating system is shut down, the pressure of the condenser 102 can be maintained while reducing energy consumption.

In addition, the flow area of the flow channel portion varies along the circumferential direction. Thus, through the rotation of the sliding block 30, different portions of the flow channel portion in the sliding block 30 communicate with the outlet 222, so as to realize the regulation of the flow rate. Since the flow area of the flow channel portion along the circumferential direction is easy to set and regulate, and can be set to a small value according to the system requirements, it is easy to control the flow deviation to be within a small range such as less than 5% by setting the flow area of the flow channel portion of the sliding block 30, and the flow control accuracy is high. Thus, the refrigerator refrigerating system can not only regulate the flow rate of the refrigerant according to the working condition, but also has high regulation accuracy, which can enable the refrigerator to achieve better operating conditions under different environmental conditions and thereby improve the energy efficiency of the system.

The refrigerator refrigerating system further includes a heat exchanger 105. The heat exchanger 105 is configured to heat the refrigerant flowing from the evaporator 103 to the compressor 101, so as not to cause a liquid impact to the compressor 101.

In an embodiment, the heat exchanger 105 includes a capillary tube 151 and a gas return tube 152, wherein the capillary tube 151 is arranged between the valve device 100 and the condenser 102, one end of the gas return tube 152 is connected to the outlet of the evaporator 103, another end of the gas return tube 152 is connected to the inlet of the compressor 101, and the capillary tube 151 is wound around the gas return tube 152, as shown in Figure 14.

The structure design of the heat exchanger 105 makes use of a high-temperature refrigerant between the condenser 102 and the evaporator 103 to heat a low-temperature refrigerant flowing out of the evaporator 103, which can avoid an additional heating source and make the structure of the refrigeration system simpler and more compact.

It should be noted that, with the above structure, although the capillary tube 151 is provided between the condenser 102 and the evaporator 103, it can be understood that, the capillary tube 151 no longer has a substantial throttling function and only functions to exchange heat.

Specifically, in order to facilitate winding the capillary tube 151 around the gas return tube 152, a diameter of the capillary tube 151 may be set to a slightly smaller value such as 0.7mm. It should be understood that, the diameter of the capillary tube 151 cannot be set too small, which affects the throttling of the valve device 100. Specifically, the diameter of the capillary tube 151 should be set to such a value that the flow area thereof is not smaller than a maximum flow area of the flow channel portion of the valve device 100.

In an embodiment, a drying filter 104 is further provided between the condenser 102 and the capillary tube 151 to filter out the impurities in the refrigerant.

The valve device and the refrigerator refrigerating system having the same provided by the present invention are described in detail hereinbefore. The principle and the embodiments of the present invention are illustrated herein by way of specific embodiments. The above description of embodiments is only intended to help understand the present invention. Although the invention has been explained in relation to its preferred embodiments as mentioned above, it is to be understood that many other possible modifications and variations can be made without departing from the scope of the present invention. It is, therefore, contemplated that the appended claims will cover such modifications and variations that fall within the true scope of the invention.

## Claims

1. A valve device, comprising a drive component and a valve seat component (20), wherein the valve seat component (20) has an inlet (221) and an outlet (222), and the inlet (221) is in communication with a valve chamber (R1);
the valve device further comprises a sliding block (30) supported by the valve seat component (20), and a bottom surface of the sliding block (30) is in contact with a top surface of the valve seat component (20);
the sliding block (30) has a flow channel portion and a blocking portion, the flow channel portion and the blocking portion are circumferentially sleeved on a rotation center of the sliding block (30), a flow area of the flow channel portion varies along a circumferential direction, and the flow channel portion is in communication with the valve chamber (R1); and
a drive component is configured to drive the sliding block (30) to rotate with respect to the valve seat component (20), to cause the flow channel portion to communicate with the outlet (222) or to cause the blocking portion to close the outlet (222),
**characterised in that,**
the valve device further comprises a filter component (40), which is configured to filter a refrigerant flowing into the flow channel portion; and
the sliding block (30) is provided with a chamber (32) at a top portion of the sliding block (30), the filter component (40) is embedded in the chamber (32) and has a predetermined distance from a bottom wall of the chamber (32), and the flow channel portion is in communication with a receiving chamber (R2) formed between the filter component (40) and the chamber (32).

2. The valve device according to claim 1, wherein the drive component comprises a rotor component (10), the rotor component (10) comprises a magnet (11) and a rotating shaft (12) inserted in the magnet (11), the sliding block (30) is sleeved on the rotating shaft (12), and the rotor component (10) is configured to drive the sliding block (30) to rotate when the rotor component (10) rotates.

3. The valve device according to claim 2, wherein a latching structure is further provided between the magnet (11) and the sliding block (30); and
a protruding key portion (113) is provided at a lower end of the magnet (11), the sliding block (30) has a key groove (34) engaged with the key portion (113), and the key portion (113) and the key groove (34) together form the latching structure.

4. The valve device according to claim 2, wherein the valve device further comprises a casing (60) enclosing the magnet (11), a bottom of the casing (60) is fixed to the valve seat component (20), the magnet (11) comprises a cylindrical portion (111) and a partition portion (112), the partition portion (112) is configured to separate an inner chamber of the cylindrical portion (111) into an upper chamber and a lower chamber, and the valve chamber (R1) is defined by a peripheral wall of the lower chamber, the casing (60) and the valve seat component (20).

5. The valve device according to claim 4, wherein a preloading spring (36) is further provided between the sliding block (30) and the partition portion (112) to bring the sliding block (30) into close contact with the top surface of the valve seat component (20).

6. The valve device according to claim 4, wherein the partition portion (112) has more than one balance hole (1121), which is configured to communicate the upper chamber with the lower chamber.

7. The valve device according to claim 2, wherein the rotating shaft (12) is inserted in the valve seat component (20), and the rotating shaft is in a clearance fit with the valve seat component, to allow the rotating shaft (12) to be rotatable relative to the valve seat component (20).

8. The valve device according to any one of claims 1 to 7, wherein the valve device further comprises a stop component, which is configured to define an initial position of the sliding block (30) relative to the valve seat component (20); and
the stop component comprises a first stop portion (50) fixed to the valve seat component (20) and a second stop portion (114) arranged on the drive component, the drive component is configured to drive the second stop portion (114) to rotate synchronously with the sliding block (30), and the first stopping portion (50) and the second stopping portion (114) are configured as follows:
the second stopping portion (114) is in a state abutting against one side of the first stopping portion (50), and the blocking portion closes the outlet (222); and during rotation of the second stopping portion (114) with the sliding block (30), one end and another end of the flow channel portion are sequentially in communication with the outlet (222), and in a rotating direction, in a state where another end of the flow channel portion is in communication with the outlet (222), the second stopping portion (114) abuts against another side of the first stopping portion (50).

9. The valve device according to any one of claims 1 to 7, wherein the flow channel portion comprises a plurality of flow channel orifices (31) with different diameters, and the plurality of flow channel orifices (31) are arranged in an arc.

10. The valve device according to claim 9, wherein the diameters of the plurality of flow channel orifices (31) are sequentially increased in the circumferential direction.

11. The valve device according to claim 9, wherein the bottom surface of the sliding block (30) is provided with a plurality of inner grooves (35) respectively corresponding to positions of the plurality of flow channel orifices (31), and each of the plurality of the inner grooves (35) is larger than the corresponding flow channel orifice (31).

12. The valve device according to any one of claims 1 to 7, wherein a support boss (33) configured to support the filter component (40) is provided at a middle position of the bottom of the chamber (32), and the receiving chamber (R2) is defined by a bottom wall of the filter component (40), a side wall and the bottom wall of the chamber (32) and an outer peripheral wall of the support boss (33).

13. The valve device according to any one of claims 1 to 7, wherein the filter component (40) is formed by sintering tin-bronze powder or stainless steel powder, or the filter component (40) is made of multi layers of stainless steel mesh.

14. A refrigerator refrigerating system, comprising a compressor (101), a condenser (102) and an evaporator (103), wherein an inlet of the condenser (102) is connected to an outlet of the compressor (101), an outlet of the evaporator (103) is connected to an inlet of the compressor (101), the refrigerator refrigerating system further comprises a valve device (100) arranged between the condenser (102) and the evaporator (103), and the valve device (100) is the valve device according to any one of claims 1 to 13.

## Patentansprüche

1. Ventileinrichtung, umfassend eine Antriebskomponente und eine Ventilsitzkomponente (20), wobei die Ventilsitzkomponente (20) einen Einlass (221) und einen Auslass (222) aufweist und der Einlass (221) mit einer Ventilkammer (R1) in Verbindung steht;
wobei die Ventileinrichtung ferner einen Gleitblock (30) umfasst, der von der Ventilsitzkomponente (20) gelagert wird, und eine untere Fläche des Gleitblocks (30) mit einer oberen Fläche der Ventilsitzkomponente (20) in Kontakt steht;
wobei der Gleitblock (30) einen Strömungskanalabschnitt und einen Sperrabschnitt aufweist, der Strömungskanalabschnitt und der Sperrabschnitt in Umfangsrichtung auf ein Rotationszentrum des Gleitblocks (30) aufgeschoben sind, ein Strömungsquerschnitt des Strömungskanalabschnitts entlang einer Umfangsrichtung variiert und der Strömungskanalabschnitt mit der Ventilkammer (R1) in Verbindung steht; und
wobei eine Antriebskomponente dazu ausgelegt ist, den Gleitblock (30) anzutreiben, um sich in Bezug auf die Ventilsitzkomponente (20) zu drehen, um zu bewirken, dass der Strömungskanalabschnitt mit dem Auslass (222) in Verbindung kommt, oder um zu bewirken, dass der Sperrabschnitt den Auslass (222) verschließt,
**dadurch gekennzeichnet, dass** die Ventileinrichtung ferner eine Filterkomponente (40) umfasst, die dazu ausgelegt ist, ein in den Strömungskanalabschnitt strömendes Kältemittel zu filtern; und
der Gleitblock (30) an einem oberen Abschnitt des Gleitblocks (30) mit einer Kammer (32) versehen ist, die Filterkomponente (40) in der Kammer (32) eingebettet ist und einen vorbestimmten Abstand von einer Bodenwand der Kammer (32) hat, und der Strömungskanalabschnitt mit einer Aufnahmekammer (R2) in Verbindung steht, die zwischen der Filterkomponente (40) und der Kammer (32) ausgebildet ist.

2. Ventileinrichtung nach Anspruch 1, wobei die Antriebskomponente eine Rotorkomponente (10) umfasst, die Rotorkomponente (10) einen Magneten (11) und eine in den Magneten (11) eingesetzte Drehwelle (12) umfasst, der Gleitblock (30) auf die Drehwelle (12) aufgeschoben ist und die Rotorkomponente (10) dazu ausgelegt ist, den Gleitblock (30) drehend anzutreiben, wenn sich die Rotorkomponente (10) dreht.

3. Ventileinrichtung nach Anspruch 2, wobei ferner eine Verriegelungsstruktur zwischen dem Magneten (11) und dem Gleitblock (30) vorgesehen ist; und
wobei ein vorstehender Keilabschnitt (113) an einem unteren Ende des Magneten (11) vorgesehen ist, der Gleitblock (30) eine Keilnut (34) aufweist, die mit dem Keilabschnitt (113) in Eingriff steht, und der Keilabschnitt (113) und die Keilnut (34) zusammen die Verriegelungsstruktur bilden.

4. Ventileinrichtung nach Anspruch 2, wobei die Ventileinrichtung ferner ein Gehäuse (60) umfasst, das den Magneten (11) umschließt, eine Unterseite des Gehäuses (60) an der Ventilsitzkomponente (20) befestigt ist, der Magnet (11) einen zylindrischen Abschnitt (111) und einen Unterteilungsabschnitt (112) umfasst, der Unterteilungsabschnitt (112) dazu ausgelegt ist, eine innere Kammer des zylindrischen Abschnitts (111) in eine obere Kammer und eine untere Kammer zu unterteilen, und die Ventilkammer (R1) durch eine Umfangswand der unteren Kammer, das Gehäuse (60) und die Ventilsitzkomponente (20) definiert ist.

5. Ventileinrichtung nach Anspruch 4, wobei ferner zwischen dem Gleitblock (30) und dem Unterteilungsabschnitt (112) eine Vorspannfeder (36) vorgesehen ist, um den Gleitblock (30) in engen Kontakt mit der oberen Fläche der Ventilsitzkomponente (20) zu bringen.

6. Ventileinrichtung nach Anspruch 4, wobei der Unterteilungsabschnitt (112) mehr als eine Ausgleichsbohrung (1121) aufweist, die dazu ausgelegt ist, die obere Kammer mit der unteren Kammer in Verbindung zu bringen.

7. Ventileinrichtung nach Anspruch 2, wobei die Drehwelle (12) in die Ventilsitzkomponente (20) eingesetzt ist und die Drehwelle sich in Spielpassung mit der Ventilsitzkomponente befindet, damit sich die Drehwelle (12) relativ zu der Ventilsitzkomponente (20) drehen kann.

8. Ventileinrichtung nach einem der Ansprüche 1 bis 7, wobei die Ventileinrichtung ferner eine Anschlagkomponente umfasst, die dazu ausgelegt ist, eine Ausgangsposition des Gleitblocks (30) relativ zur Ventilsitzkomponente (20) zu definieren; und
wobei die Anschlagkomponente einen an der Ventilsitzkomponente (20) befestigten ersten Anschlagabschnitt (50) und einen an der Antriebskomponente angeordneten zweiten Anschlagabschnitt (114) umfasst, wobei die Antriebskomponente dazu ausgelegt ist, den zweiten Anschlagabschnitt (114) so anzutreiben, dass er sich synchron mit dem Gleitblock (30) dreht, und der erste Anschlagabschnitt (50) und der zweite Anschlagabschnitt (114) wie folgt ausgelegt sind:
in einem Zustand, in dem der zweite Anschlagabschnitt (114) an einer Seite des ersten Anschlagabschnitts (50) anliegt, verschließt der Sperrabschnitt den Auslass (222); wobei während der Drehung des zweiten Anschlagabschnitts (114) mit dem Gleitblock (30) das eine Ende und das andere Ende des Strömungskanalabschnitts in einer Drehrichtung nacheinander mit dem Auslass (222) in Verbindung kommen, und in einem Zustand, in dem das andere Ende des Strömungskanalabschnitts mit dem Auslass (222) in Verbindung steht, liegt der zweite Anschlagabschnitt (114) an einer anderen Seite des ersten Anschlagabschnitts (50) an.

9. Ventileinrichtung nach einem der Ansprüche 1 bis 7, wobei der Strömungskanalabschnitt eine Vielzahl von Strömungskanalöffnungen (31) mit unterschiedlichen Durchmessern umfasst und die Vielzahl von Strömungskanalöffnungen (31) in einem Bogen angeordnet sind.

10. Ventileinrichtung nach Anspruch 9, wobei die Durchmesser der Vielzahl von Strömungskanalöffnungen (31) nacheinander in Umfangsrichtung zunehmen.

11. Ventileinrichtung nach Anspruch 9, wobei die untere Fläche des Gleitblocks (30) mit einer Vielzahl von inneren Nuten (35) versehen ist, die jeweils den Positionen der Vielzahl von Strömungskanalöffnungen (31) entsprechen, und jede aus der Vielzahl von inneren Nuten (35) größer ist als die entsprechende Strömungskanalöffnung (31).

12. Ventileinrichtung nach einem der Ansprüche 1 bis 7, wobei ein Lagervorsprung (33) zum Lagern der Filterkomponente (40) an einer mittleren Position des Bodens der Kammer (32) vorgesehen ist, und die Aufnahmekammer (R2) durch eine Bodenwand der Filterkomponente (40), eine Seitenwand und die Bodenwand der Kammer (32) und eine äußere Umfangswand des Lagervorsprungs (33) definiert ist.

13. Ventileinrichtung nach einem der Ansprüche 1 bis 7, wobei die Filterkomponente (40) durch Sintern von Zinn-Bronze-Pulver oder Edelstahlpulver gebildet ist oder die Filterkomponente (40) aus mehreren Schichten von Edelstahlgewebe herstellt ist.

14. Kühlschrank-Kühlsystem mit einem Kompressor (101), einem Kondensator (102) und einem Verdampfer (103), wobei ein Einlass des Kondensators (102) mit einem Auslass des Kompressors (101) verbunden ist, ein Auslass des Verdampfers (103) mit einem Einlass des Kompressors (101) verbunden ist, das Kühlschrank-Kühlsystem ferner eine zwischen Kondensator (102) und Verdampfer (103) angeordnete Ventileinrichtung (100) umfasst und die Ventileinrichtung (100) die Ventileinrichtung nach einem der Ansprüche 1 bis 13 ist.

## Revendications

1. Dispositif de soupape, comprenant un composant d'entraînement et un composant de siège de soupape (20), dans lequel le composant de siège de soupape (20) présente une entrée (221) et une sortie (222), et l'entrée (221) est en communication avec une chambre de soupape (R1) ;
le dispositif de soupape comprend en outre un bloc coulissant (30) supporté par le composant de siège de soupape (20), et une surface inférieure du bloc coulissant (30) est en contact avec une surface supérieure du composant de siège de soupape (20) ; le bloc coulissant (30) présente une partie de canal d'écoulement et une partie de blocage, la partie de canal d'écoulement et la partie de blocage sont emmanchées circonférentiellement sur un centre de rotation du bloc coulissant (30), une zone d'écoulement de la partie de canal d'écoulement varie le long d'une direction circonférentielle, et la partie de canal d'écoulement est en communication avec la chambre de soupape (R1) ; et
un composant d'entraînement est configuré pour entraîner le bloc coulissant (30) en rotation par rapport au composant de siège de soupape (20), pour amener la partie de canal d'écoulement à communiquer avec la sortie (222) ou pour amener la partie de blocage à fermer la sortie (222),
**caractérisé en ce que**
le dispositif de soupape comprend en outre un composant filtrant (40), qui est configuré pour filtrer un réfrigérant s'écoulant dans la partie de canal d'écoulement ; et
le bloc coulissant (30) est pourvu d'une chambre (32) sur une partie supérieure du bloc coulissant (30), le composant filtrant (40) est intégré dans la chambre (32) et présente une distance prédéterminée par rapport à une paroi inférieure de la chambre (32), et la partie de canal d'écoulement est en communication avec une chambre de réception (R2) formée entre le composant filtrant (40) et la chambre (32).

2. Dispositif de soupape selon la revendication 1, dans lequel le composant d'entraînement comprend un composant de rotor (10), le composant de rotor (10) comprend un aimant (11) et un arbre de rotation (12) inséré dans l'aimant (11), le bloc coulissant (30) est emmanché sur l'arbre de rotation (12), et le composant de rotor (10) est configuré pour entraîner le bloc coulissant (30) en rotation lorsque le composant de rotor (10) tourne.

3. Dispositif de soupape selon la revendication 2, dans lequel une structure de verrouillage est en outre prévue entre l'aimant (11) et le bloc coulissant (30) ; et
une partie de clé faisant saillie (113) est prévue sur une extrémité inférieure de l'aimant (11), le bloc coulissant (30) présente une rainure de clé (34) en prise avec la partie de clé (113), et la partie de clé (113) et la rainure de clé (34) forment ensemble la structure de verrouillage.

4. Dispositif de soupape selon la revendication 2, dans lequel le dispositif de soupape comprend en outre un boîtier (60) entourant l'aimant (11), un fond du boîtier (60) est fixé au composant de siège de soupape (20), l'aimant (11) comprend une partie cylindrique (111) et une partie de séparation (112), la partie de séparation (112) est configurée pour séparer une chambre intérieure de la partie cylindrique (111) en une chambre supérieure et en une chambre inférieure, et la chambre de soupape (R1) est définie par une paroi périphérique de la chambre inférieure, le boîtier (60) et le composant de siège de soupape (20).

5. Dispositif de soupape selon la revendication 4, dans lequel un ressort de précharge (36) est en outre prévu entre le bloc coulissant (30) et la partie de séparation (112) pour amener le bloc coulissant (30) en contact étroit avec la surface supérieure du composant de siège de soupape (20).

6. Dispositif de soupape selon la revendication 4, dans lequel la partie de séparation (112) présente plus d'un trou d'équilibrage (1121), qui est configuré pour mettre en communication la chambre supérieure avec la chambre inférieure.

7. Dispositif de soupape selon la revendication 2, dans lequel l'arbre de rotation (12) est inséré dans le composant de siège de soupape (20), et l'arbre de rotation est dans un ajustement avec jeu avec le composant de siège de soupape pour permettre à l'arbre de rotation (12) de pouvoir être tourné par rapport au composant de siège de soupape (20).

8. Dispositif de soupape selon l'une quelconque des revendications 1 à 7, dans lequel le dispositif de soupape comprend en outre un composant d'arrêt, qui est configuré pour définir une position initiale du bloc coulissant (30) par rapport au composant de siège de soupape (20) ; et
le composant d'arrêt comprend une première partie d'arrêt (50) fixée au composant de siège de soupape (20) et une deuxième partie d'arrêt (114) disposée sur le composant d'entraînement, le composant d'entraînement est configuré pour entraîner la deuxième partie d'arrêt (114) en rotation de manière synchrone avec le bloc coulissant (30), et la première partie d'arrêt (50) et la deuxième partie d'arrêt (114) sont configurées comme suit :
la deuxième partie d'arrêt (114) est dans un état venant en butée contre un côté de la première partie d'arrêt (50), et la partie de blocage ferme la sortie (222) ; et pendant la rotation de la deuxième partie d'arrêt (114) avec le bloc coulissant (30), une extrémité et une autre extrémité de la partie de canal d'écoulement sont en communication de manière séquentielle avec la sortie (222), et dans une direction de rotation, dans un état où une autre extrémité de la partie de canal d'écoulement est en communication avec la sortie (222), la deuxième partie d'arrêt (114) vient en butée contre un autre côté de la première partie d'arrêt (50).

9. Dispositif de soupape selon l'une quelconque des revendications 1 à 7, dans lequel la partie de canal d'écoulement comprend une pluralité d'orifices de canal d'écoulement (31) avec des diamètres différents, et la pluralité d'orifices de canal d'écoulement (31) sont disposés en un arc.

10. Dispositif de soupape selon la revendication 9, dans lequel les diamètres de la pluralité d'orifices de canal d'écoulement (31) sont augmentés de manière séquentielle dans la direction circonférentielle.

11. Dispositif de soupape selon la revendication 9, dans lequel la surface inférieure du bloc coulissant (30) est pourvue d'une pluralité de rainures intérieures (35) correspondant respectivement à des positions de la pluralité d'orifices de canal d'écoulement (31), et chacune de la pluralité des rainures intérieures (35) est plus grande que l'orifice de canal d'écoulement (31) correspondant.

12. Dispositif de soupape selon l'une quelconque des revendications 1 à 7, dans lequel un bossage de support (33) configuré pour supporter le composant filtrant (40) est prévu sur une position centrale du fond de la chambre (32), et la chambre de réception (R2) est définie par une paroi inférieure du composant filtrant (40), une paroi latérale et la paroi inférieure de la chambre (32) et une paroi périphérique extérieure du bossage de support (33).

13. Dispositif de soupape selon l'une quelconque des revendications 1 à 7, dans lequel le composant filtrant (40) est formé par frittage de poudre d'étain-bronze ou de poudre d'acier inoxydable, ou le composant filtrant (40) est constitué de plusieurs couches de maille en acier inoxydable.

14. Système de réfrigération de réfrigérateur, comprenant un compresseur (101), un condenseur (102) et un évaporateur (103), dans lequel une entrée du condenseur (102) est reliée à une sortie du compresseur (101), une sortie de l'évaporateur (103) est reliée à une entrée du compresseur (101), le système de réfrigération de réfrigérateur comprend en outre un dispositif de soupape (100) disposé entre le condenseur (102) et l'évaporateur (103), et le dispositif de soupape (100) est le dispositif de soupape selon l'une quelconque des revendications 1 à 13.
